**Europäisches Patentamt**

**European Patent Office**

**Office européen des brevets**

(19)

(11) Veröffentlichungsnummer: **0 059 263**

**B1**

(12) # EUROPÄISCHE PATENTSCHRIFT

(45) Veröffentlichungstag der Patentschrift:
04.02.87

(21) Anmeldenummer: **81110020.5**

(22) Anmeldetag: **30.11.81**

(51) Int. Cl.⁴: **F 16 L 59/16,** F 16 L 59/14

(54) Rohrförmige Überschubmuffe für den Verbindungsbereich von Rohrschüssen eines wärmegedämmten Rohres.

(30) Priorität: **26.02.81 DE 3107310**

(43) Veröffentlichungstag der Anmeldung:
**08.09.82 Patentblatt 82/36**

(45) Bekanntmachung des Hinweises auf die Patenterteilung:
**04.02.87 Patentblatt 87/6**

(84) Benannte Vertragsstaaten:
**AT BE DE LU NL**

(56) Entgegenhaltungen:
**AT-B-318 330**
**AT-B-323 487**
**DE-A-2 252 295**
**DE-A-2 427 632**
**DE-A-3 013 796**

(73) Patentinhaber: **G + H MONTAGE GmbH,
Westendstrasse 17, D-6700 Ludwigshafen (DE)**

(72) Erfinder: **Berger, Alfred, Carl- Zimmermann
Strasse 49, D-6724 Dudenhofen (DE)**

(74) Vertreter: **Kuhnen, Wacker & Partner,
Schneggstrasse 3-5 Postfach 1729, D-8050 Freising
(DE)**

EP 0 059 263 B1

## Beschreibung

Die Erfindung betrifft eine rohrförmige Überschubmuffe für den Verbindungsbereich von Rohrschüssen eines wärmegedämmten Rohres, nach dem Oberbegriff des Anspruchs 1, sowie ein Verfahren zu seiner Montage.

Wärmegedämmte Rohre aus am Ort miteinander verschweißten Rohrschüssen werden insbesondere für erdverlegte Fernwärme-Rohrleitungen verwendet und besitzen in einer häufigen Bauweise ein Mediumrohr aus Stahl, ein das Mediumrohr mit Abstand umgebendes äußeres Mantelrohr aus Polyäthylen und dazwischen eine Wärmedämmschicht aus Polyurethan-Hartschaum oder auch Mineralfaserwolle. Derartige Rohre können fabrikmäßig in einzelnen Rohrschüssen vorgefertigt werden, wobei am Ort die Verbindung der Rohrschüsse erfolgt. Hierzu ragt an den fabrikmäßig vorgefertigten Rohrschüssen das innere Mediumrohr um beispielsweise 10 cm beidseitig über die Wärmedämmschicht und das Mantelrohr hinaus, so daß bei der Schweißung benachbarter Enden der Mediumrohr-Rohrschüsse die Schweißstelle gut zugänglich ist und keine Beeinträchtigung von Wärmedämmschicht und Mantelrohr durch die Schweißwärme erfolgt. Im Anschluß an die Schweißung muß dann der Bereich des Schweißstoßes am Ort mit einem entsprechenden Abschnitt einer Wärmedämmschicht und einer muffenartigen Ummantelung umgeben werden, die häufig als rohrförmig umfangsseitig geschlossene Überschubmuffe ausgebildet ist und welche die einander benachbarten Enden des Mantelrohres im Schweißbereich überspannt.

Es liegt auf der Hand, daß eine umfangsseitig geschlossene, rohrförmige Überschubmuffe (DE-A- 2 252 295) vor der Schweißung über eines der Rohrenden geschoben werden muß, wo insbesondere bei erdverlegten Rohren und schlechten Witterungsbedingungen die Muffe verschmutzt und eingedrungene Feuchtigkeit, Schlamm oder Sandreste nicht einwandfrei entfernt werden können, so daß Feuchtigkeit an der Innenseite der Überschubmuffe im Bereich des Schweißstoßes vorliegt. Das erforderliche Nachdämmen der Schweißverbindung muß dann unter Anwesenheit von Schmutz und Feuchtigkeit durchgeführt werden. Dies hat eine mangelhafte Qualität des Dämm-Materials zur Folge; beispielsweise im Falle der Verwendung von Polyurethan-Hartschaum zerstört ein Teil Wasser 15 Teile Schaum, so daß sich durch den Feuchtigkeitszutritt minderwertiger Schaum mit verschlechterten Dämmeigenschaften ergibt. Auch Mineralwolle kann bei längeren Feuchtigkeitseinwirkungen Degradationserscheinungen zeigen. Ein Schadhaftwerden der Verbindungsbereiche während des Betriebs kann nicht ausgeschlossen werden.

Bei einem andern wärmegedämmten Roh ist daher alternativ vorgesehen, anstelle einer umfangsseitig geschlossenen rohrförmigen Überschubmuffe eine Muffe aus einem vorbereiteten gerundeten Blechmäntel aus Stahlblech, Edelstahlblech oder Aluminiumblech vorzusehen, der an einer Längsnaht durch Nieten oder Schrauben verbunden werden kann. Durch einen solchen geschlitzten Blechmantel, für den eine Anbringung nach Abschluß der Schweißarbeiten genügt, wird vermieden, daß die Muffe während der gesamten Montagearbeiten am Rohr über eines der Rohrenden aufgeschoben bereitgestellt sein muß und so verschmutzt. Ein derartiger geschlitzter Blechmantel ist jedoch vergleichsweise teuer und erfordert erheblichen Montageaufwand.

Der Erfindung liegt die Aufgabe zugrunde, eine umfangsseitig geschlossene, rohrförmige Überschubmuffe der im Oberbegriff des Anspruchs 1 umrissenen Gattung zu schaffen, mit der auf einfache Weise ein Eindringen von Feuchtigkeit und Fremdkörpern in den Verbindungsbereich zwischen Rohrschüssen vermieden werden kann.

Die Lösung dieser Aufgabe erfolgt durch die kennzeichnenden Merkmale des Anspruchs 1.

Durch die geschlossenwandige Umhüllung der Überschubmuffe wird sicher verhindert, daß deren Oberfläche Feuchtigkeit oder Verschmutzungen ausgesetzt ist. Da die Umhüllung auch an der Innenoberfläche der Überschubmuffe anliegt, ermöglicht sie, daß die Überschubmuffe mit der Umhüllung über das Ende eines Rohrschusses geschoben werden kann und, durch die Umhüllung geschützt, während der Montagearbeiten dort liegenbleiben kann. Nach Verbindung der benachbarten Enden der Rohrschüsse des Mediumrohres kann der Verbindungsbereich der Rohre gereinigt und die Überschubmuffe unter Abnahme der Umhüllung in der gewünschten Montagestellung angebracht sowie in üblicher Weise abgedichtet werden. Die Abnahme der Umhüllung ist problemlos möglich, da diese an den Innen- und Außenoberflächen der Überschubmuffe nicht haftet.

Durch die herstellungstechnisch einfache Maßnahme, jede Überschubmuffe im Anschluß an ihre Herstellung mit einer derartigen, an den Innen- und Außenoberflächen relativ eng anliegenden Umhüllung zu umgeben, die nicht an den Oberflächen der Überschubmuffe haftet und ein Aufschieben der Überschubmuffe auf die Enden der Rohrschüsse ermöglicht, wird somit erreicht, daß mit einer zur Montage einfach überzuschiebenden Muffe gearbeitet werden kann und dennoch Verschmutzungen im Verbindungsbereich ausgeschlossen werden können.

Die Unteransprüche 2 bis 7 haben vorteilhafte Weiterbildungen der Erfindung zum Inhalt.

Anspruch 8 gibt ein besonders geeignetes Verfahren zur Montage einer derartigen Überschubmuffe an.

Weitere Einzelheiten, Merkmale und Vorteile der Erfindung ergeben sich aus der nachfolgenden Beschreibung zweier Ausführungsformen anhand der Zeichnung.

Es zeigt

Fig. 1 einen Axialschnitt durch den Verbindungsbereich zweier Rohrschüsse im unmittelbaren Anschluß an die Verschweißung der benachbarten Enden der Medium-Rohrschüsse mit auf ein Ende eines Rohrschusses aufgeschobener Überschubmuffe,

Fig. 2 die Einzelheit aus dem strichpunktierten Kreis I in Fig. 1 in vergrößerter Darstellung,

Fig. 3 eine alternative Ausführungsform der Überschubmuffe in einer Fig. 2 entsprechenden Darstellung,

Fig. 4 bis 7 einzelne Montageschritte bei der Anbringung der Überschubmuffe in der endgültigen Stellung über dem Verbindungsbereich in einer Fig. 1 entsprechenden Darstellung.

In der Zeichnung ist mit 1 ein Mediumrohr bezeichnet, welches im Beispielsfalle aus Stahl gefertigt ist und insbesondere für eine Fernwärme-Rohrleitung verwendet werden kann. Das Mediumrohr 1 besteht aus benachbarten Rohrschüssen 1a und 1b, die an einem Schweißstoß 1c miteinander verbunden sind. Die Rohrschüsse 1a und 1b sind fabrikmäßig vorgefertigt und über den größten Teil ihrer Länge mit einer Wärmedämmschicht 2 beispielsweise aus Polyurethan-Hartschaum und einem Mantelrohr 3 beispielsweise aus Polyäthylen versehen. Die Wärmedämmschicht 2 und das Mantelrohr 3 sind jedoch zu beiden Seiten jedes Rohrschusses 1a oder 1b um ein Maß von beispielsweise 10 cm oder mehr kürzer als das Ende des Mediumrohres 1 zum späteren Schweißstoß 1c hin, so daß dieses vorsteht und eine unbehinderte Verschweißung im Bereich des Schweißstoßes 1c gewährleistet.

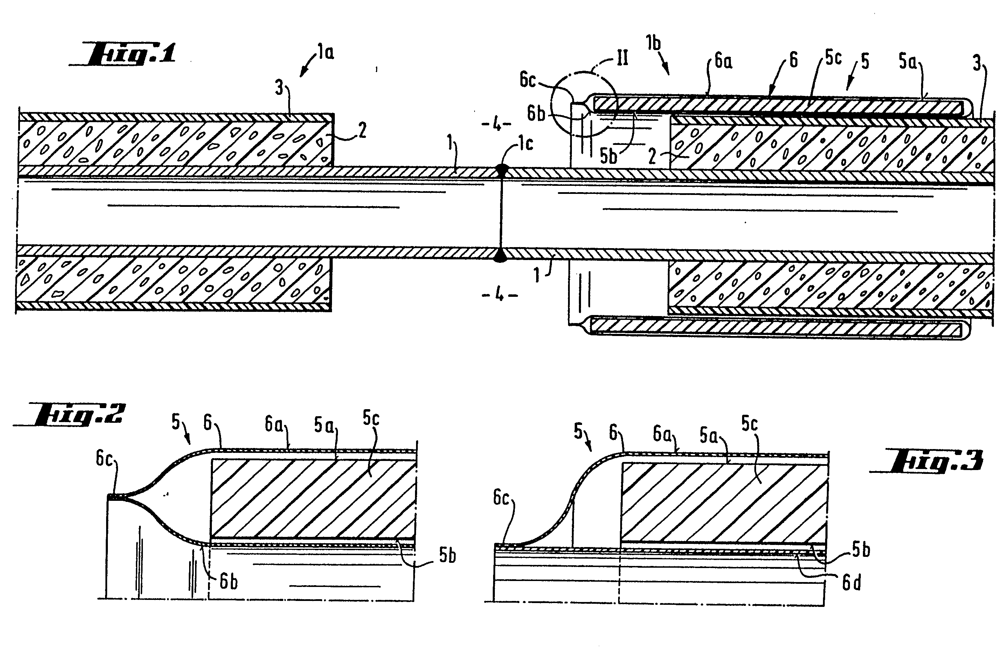

Im Anschluß an die Schweißung am Ort liegt somit der in den Fig. 1 und 4 bis 7 dargestellte Verbindungsbereich 4 zwischen den Enden der Dämmschicht 2 und des Mantelrohres 3 der beiden benachbarten Rohrschüsse 1a und 1b nackt vor, und muß eine Wärmedämmung sowie einen äußeren Schutz erhalten, der die beiden Enden des Mantelrohres 3 überdeckt.

Vor der Montage des neuen Rohrschusses 1a oder 1b ist über eines der Enden der Rohrschusse 1a oder 1b eine Überschubmuffe 5, die im Beispielsfalle aus Polyäthylen bestehen möge, geschoben worden, etwa in eine Stellung gemäß Fig. 1, in der sie die Schweißarbeiten am Schweißstoß 1c nicht behindert. Wie ohne weiteres ersichtlich ist, ist im Falle einer umfangsseitig geschlossenwandig ausgeführten Überschubmuffe 5 ein Überschieben über ein Ende eines Rohrschusses 1a oder 1b zwangsläufig erforderlich, bevor die Rohrschüsse in ihre in Fig. 1 veranschaulichte benachbarte Stellung gebracht und natürlich erst recht bevor der Schweißstoß 1c verschweißt ist, da zu einem späteren Zeitpunkt eine Anbringung der Überschubmuffe 5 in einer den Verbindungsbereich 4 umgebenden Stellung nicht mehr möglich ist. Beispielsweise im Falle erdverlegter Rohre liegt damit die Überschubmuffe 5 während der gesamten Montagearbeit zur Verbindung der Rohrschüsse 1a und 1b im Graben und ist insbesondere bei schlechten Witterungsbedingungen Feuchtigkeit und Verschmutzungen ausgesetzt.

Um dies zu vermeiden, ist die Überschubmuffe 5 mit einer Umhüllung 6 versehen, die in der Ausführungsform gemäß Fig. 1 aus einer Polyäthylenfolie bestehen möge. Die Umhüllung 6 umgibt geschlossenwandig die Außenoberfläche 5a und die Innenoberfläche 5b des eigentlichen Muffenrohres 5c, derart, daß die Oberflächen 5a und 5b nicht nur vor jeglichem Feuchtigkeits- und Schmutzzutritt geschützt sind, sondern auch der Innenraum der Überschubmuffe 5 zugänglich bleibt, so daß diese nach wie vor über das Ende eines Rohrschusses 1a oder 1b geschoben werden kann. Dabei liegt die Umhüllung 6 jedoch lose an den Oberflächen 5a und 5b an, und haftet nicht daran, so daß Relativbewegungen zwischen der Umhüllung 6 und dem Muffenrohr 5c jederzeit möglich sind.

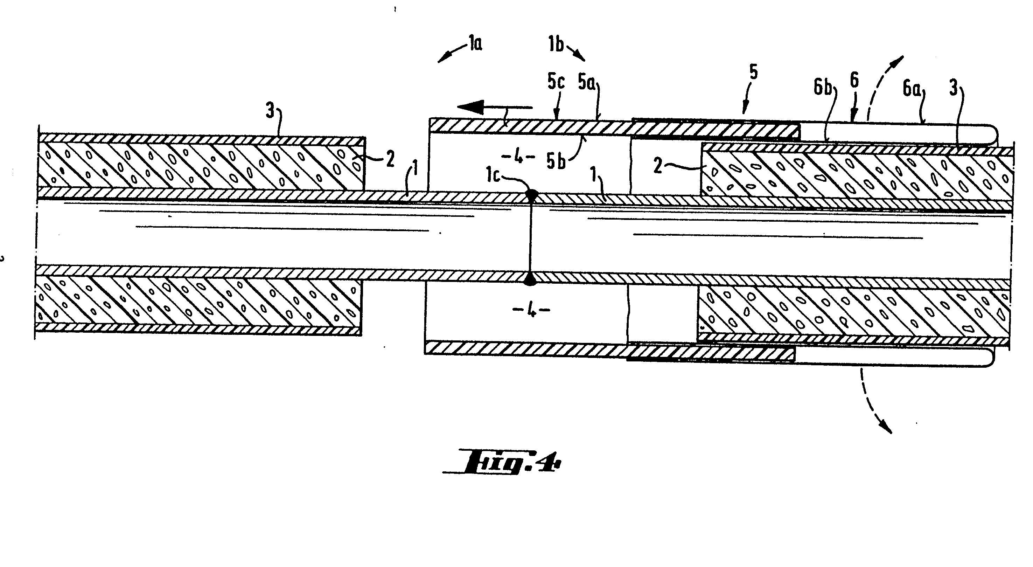

Wie Fig. 2 veranschaulicht, kann die Umhüllung 6 aus zwei Folienhälften 6a und 6b bestehen, die durch eine Flachnaht 6c an den beiden Enden des Muffenrohres 5c miteinander verschweißt sind. Eine derartige Flachnaht 6c kann auch angewandt werden, wenn die Umhüllung 6 aus einer einteiligen Folie besteht, so daß also die einteilige Folie an der dem in Fig. 2 dargestellten Ende des Muffenrohres 5c gegenüberliegenden Seite eingeschlagen und zurückgeführt ist, um an einer einseitigen Flachnaht 6c verbunden zu werden. In jedem Falle ergibt sich durch die Verwendung einer an der Stirnseite des Muffenrohres 5c liegenden Flachnaht eine problemlose Schweißmöglichkeit, die auch das Material des Muffenrohres 5c vor übermäßigen Wärmeeinwirkungen sicher schützt.

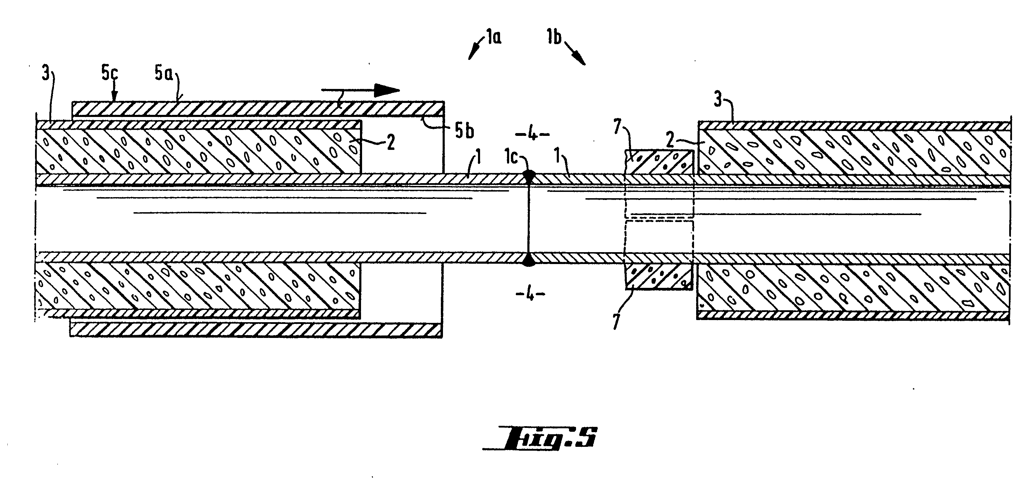

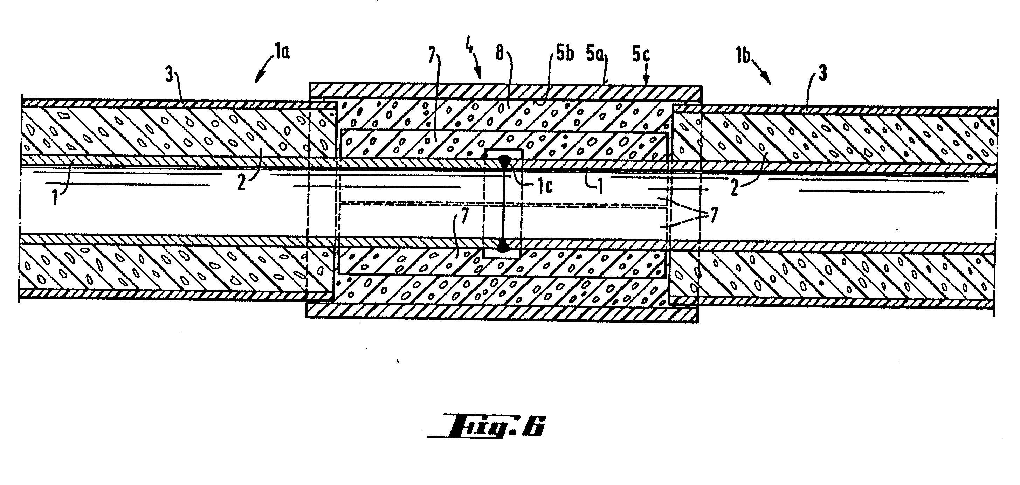

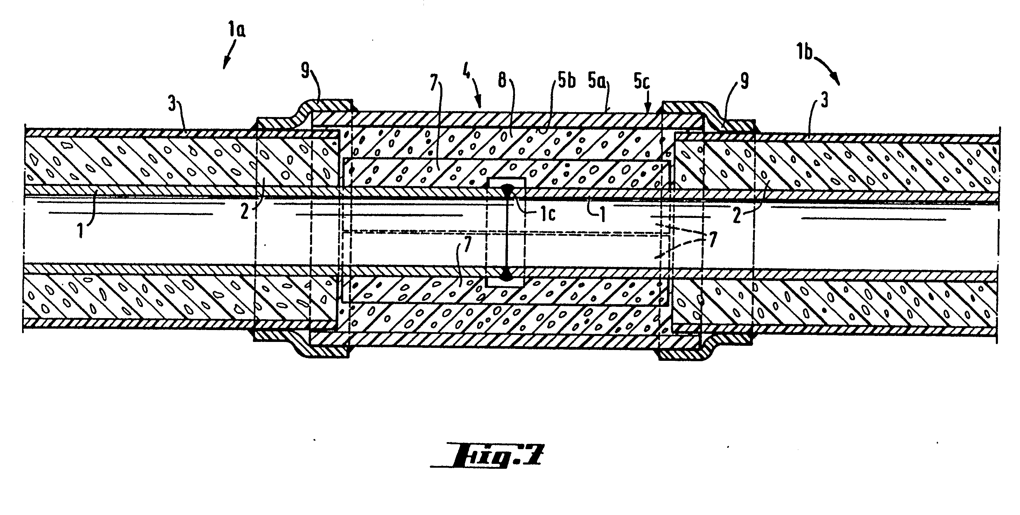

Alternativ kann auch in der aus Fig. 3 ersichtlichen Weise lediglich eine äußere Folienhälfte 6a mit einem inneren dünnen, aber formstabileren Schutzrohr 6d wiederum durch endseitige Flachnähte 6c verbunden werden. Hierdurch ergibt sich der Vorteil, daß an der Innenoberfläche 5b kein Abhängen oder Durchhängen einer relativ biegeschlaffen Folienhälfte 6b erfolgen kann, die damit beim Überschieben auf das Mantelrohr 3 des entsprechenden Rohrschusses 1a oder 1b Verletzungen ausgesetzt wäre. Das Schutzrohr 6d bietet hingegen eine glatte Innenoberfläche, auf der die Kante des Mantelrohres 3 gegebenenfalls beschädigungsfrei gleiten kann. Während die Ausbildung der Umhüllung 6 im einzelnen somit in verschiedener Weise möglich ist und auch die Verwendung einer benachbart zur Stirnseite des Muffenrohres 5c liegende Flachnaht 6c nicht zwingend erforderlich, wenn auch vorteilhaft ist, ist wesentlich, daß die Umhüllung 6 insbesondere die Innenoberfläche 5b des Muffenrohres 5c schützt, ohne jedoch daran zu haften. Wie aus der Darstellung in Fig. 4 ersichtlich ist, kann nämlich als nächster Schritt die dem Verbindungsbereich 4 benachbarte Seite der Umhüllung 6 geöffnet, beispielsweise aufgeschnitten werden, und kann das Muffenrohr 5c im nächsten Schritt zur Montage bei ruhender Umhüllung 6 aus dieser herausgeschoben werden. Zuvor ist der gegenüberliegende Bereich des Mantelrohres 3 und auch des Mediumrohres 1 gut gereinigt worden, so daß die unmittelbar aus der Umhüllung 6 austretende und daher ebenfalls völlig saubere Überschubmuffe, wie Fig. 5 veranschaulicht, vom Ende des Rohrschusses 1b auf das Ende des Rohrschusses 1a geschoben werden kann. Nach Entfernung der Umhüllung 6 durch Aufschlitzen oder sonstige Zerstörung liegt nunmehr der zuvor von der Überschubmuffe 5 abgedeckte Bereich des Mantelrohres 3 im Beispielsfalle am Ende des Rohrschusses 1b frei und kann gründlich gereinigt werden, so daß damit der gesamte Verbindungsbereich gut gereinigt ist.

Anschließend werden im Beispielsfalle vorgefertigte Halbschalen 7 aus Polyurethan-Hartschaum an den Umfang des Mediumrohres 1 angesetzt und sodann das Muffenrohr 5c zurückgeschoben, bis es zentrisch über dem Verbindungsbereich 4 sitzt und diesen, wie Fig. 6 veranschaulicht, überdeckt. Das Muffenrohr 5c weist in nicht näher dargestellter Weise wenigstens eine Einspritzöffnung für Ortschaum auf, der sodann zur Bildung einer Ortschaum-Dämmschicht 8 an der Außenseite der Halbschalen 7 eingespritzt werden kann. Anschließend kann eine Abdichtung der seitlichen Kanten des Muffenrohres 5c in an sich bekannter Weise durch Dichtungsmaterial 9 erfolgen, wie dies in Fig. 7 veranschaulicht ist. Als Dichtungsmaterial 9 kann beispielsweise eine Polyäthylenschrumpffolie dienen, die zusammen mit der Überschubmuffe 5 auf die Enden der Rohrschüsse 1a und/oder 1b aufgebracht wurde, wie dies an sich bekannt ist. Eine Reinigung derartiger Schrumpffolien bereitet geringere Schwierigkeiten und ist überdies nicht so kritisch, da die Schrumpffolie nicht mehr in unmittelbaren Kontakt mit der Ortschaumschicht 8 gelangt.

Es liegt auf der Hand, daß der erläuterte und veranschaulichte Aufbau des wärmegedämmten Rohres und der Nachdämmung im Verbindungsbereich 4 auch anders gewählt werden kann, ohne die Anwendbarkeit der Erfindung auch nur zu beeinträchtigen. So kann anstelle eines Mediumrohres 1 aus Stahl auch ein Kunststoffrohr eingesetzt werden, und kann anstelle einer Dämmung mit Polyurethan-Hartschaum auch eine Dämmung mit Mineralfasern erfolgen. Das Muffenrohr 5c kann aus Kunststoff oder Metall bestehen. Wesentlich ist nur, daß ein Verbindungsbereich 4 zwischen Rohrschüssen 1a und 1b vorgesehen ist, der nach einer Verbindung der Schüsse des Mediumrohres 1 nachgedämmt und durch eine muffenartige Ummantelung geschützt werden muß, wobei bereits im Zuge der Montage ein Eindringen von Feuchtigkeit und Verschmutzungen in den Verbindungsbereich 4 vermieden werden muß. Unter diesen Voraussetzungen bildet die erfindungsgemäße Überschubmuffe 5 mit Umhüllung 6 bei geringem herstellungstechnischem und montagetechnischem Aufwand die Gewähr, daß der Verbindungsbereich 4 nach der Montage einwandfrei sauber vorliegt.

**Patentansprüche**

1. Rohrförmige Überschubmuffe (5) für den Verbindungsbereich von Rohrschüssen (1a, 1b) eines wärmegedämmten Rohres mit innerem Mediumrohr (1), äußerem Mantelrohr (3) und dazwischen angeordneter Dämmschicht (2), wobei die Überschubmuffe (5) den Raum zwischen benachbarten Enden der Mantelrohre (3) benachbarter Rohrschüsse zur Erzielung einer geschlossenen Mantelfläche überbrückt, dadurch gekennzeichnet, daß die Überschubmuffe (5) aus einem Muffenrohr (5c) und einer Umhüllung (6) besteht, die an den Außen- (5a) und Innenflächen (5b) des Muffenrohres (5c) lose anliegt und diese, ohne daran zu haften, geschlossen umgibt, wobei die Überschubmuffe (5) auf das äußere Mantelrohr (3) der zu verbindenden Rohrschüsse (1a, 1b) aufschiebbar ist und im aufgeschobenen Zustand das Muffenrohr (5c) und die Umhüllung (6) von einander trennbar sind.

2. Überschubmuffe nach Anspruch 1, gekennzeichnet durch eine Umhüllung (6) aus Kunststoff, insbesondere Polyäthylen.

3. Überschubmuffe nach Anspruch 1 oder 2, dadurch gekennzeichnet, daß die Umhüllung (6) wenigstens teilweise durch eine Folie (6a bzw. 6b) gebildet ist.

4. Überschubmuffe nach einem der Ansprüche 1 bis 3, dadurch gekennzeichnet, daß die Innenseite der Umhüllung (6) durch ein formstabiles Schutzrohr (6d) gebildet ist.

5. Überschubmuffe nach einem der Ansprüche 1 bis 3, dadurch gekennzeichnet, daß die Überschubmuffe ausschließlich durch Folie (6a bzw. 6b) gebildet ist.

6. Überschubmuffe nach einem der Ansprüche 1 bis 5, dadurch gekennzeichnet, daß das Material der Umhüllung (6) an wenigstens einer der Stirnseiten des Muffenrohres (5c) durch eine Flachnaht (6c) verschweißt ist.

7. Überschubmuffe nach den Ansprüchen 5 und 6, dadurch gekennzeichnet, daß eine einstückige Folie (6a, 6b) an einem Ende des Muffenrohres (5c) nach innen umgeschlagen und am gegenüberliegenden Ende des Muffenrohres (5c) durch eine einzige, ringförmige Flachnaht (6c) verschweißt ist.

8. Verfahren zur Montage einer Überschubmuffe (5) nach wenigstens einem der Ansprüche 1 bis 7, bei dem die Überschubmuffe (5) über ein Ende eines ersten Rohrschusses (1b)

geschoben und sodann die benachbarten Enden der Schüsse (1a, 1b) des Mediumrohres (1) miteinander verbunden werden, und die Überschubmuffe (5) schliesslich in die Überdeckungsstellung bezüglich des Verbindungsbereiches der Rohrschüsse geschoben wird, dadurch gekennzeichnet, daß das der auf den ersten Rohrschuß (1b) aufgeschobenen Überschubmuffe (5) gegenüberliegende Ende des zweiten, benachbarten Rohrschusses (1a) gereinigt wird, sodann das Muffenrohr (5c) aus der Umhüllung (6) auf das gereinigte gegenüberliegende Ende des zweiten Rohrschusses (1a) aufgeschoben und die Umhüllung (6) entfernt wird, daß anschließend das nunmehr dem Muffenrohr (5c) gegenüberliegende Ende des ersten Rohrschusses (1b) gereinigt, und schließlich das Muffenrohr (5c) in die Überdeckungsstellung bezüglich des Verbindungsbereiches geschoben wird.

## Claims

1) A tubular slide-on sleeve (5) for the area of connection of lengths of pipes (1a, 1b) of a heat-insulated pipe with an inner medium tube (1), an outer tube jacket (3) and an insulating layer (2) located in between them, with the slide-on sleeve (5) bridging the space between the neighboring ends of the jacket tubes (3) of neighboring lengths of pipes so as to achieve a closed surface area, characterized in that the slide-on sleeve (5) consists of a socket pipe (5c) and a case (5c), which fits closely to the outer (5a) and inner (5b) surfaces of the socket pipe (5c), surrounding them completely without adhering to them, and the overfeed socket (5) can be slipped on to the outer tube jacket (3) of the lengths of pipes that are to be connected (1a, 1b) and when in a slipped-on condition, the socket pipe (5c) and the case (6) can be separated from each other.

2. Slide-on sleeve according to claim 1, characterized in that the case (6) is made of synthetic material, especially polyethylene.

3. Slide-on sleeve according to claim 1 or 2, characterized in that the case (6) is made at least partially of foil (6a or 6b).

4. Slide-on sleeve according to one of the claims 1 to 3, characterized in that the inside of the case (6) is constituted by a protective tube (6d) having a stable form.

5. Slide-on sleeve according to one of the claims 1 to 3, characterized in that the slide-on sleeve is made of foil (6a or 6b) exclusively.

6. Slide-on sleeve according to one of the claims 1 to 5, characterized in that the material of the case (6) is welded by means of a flush weld (6c) at at least one of the front sides of the socket pipe (5c).

7. Slide-on sleeve according to claims 5 and 6, characterized in that a single piece of foil (6a, 6b) is folded inward on one end of the socket pipe (5c) and is welded by means of a single, ringshaped flush weld (6c) on to the opposite end of the socket pipe (5c).

8. Procedure for mounting a slide-on sleeve (5) according to at least one of the claims 1 to 7, in which the slide-on sleeve (5) is pushed over one end of a first length of pipe (16) and then the neighboring ends of the pipes (1a, 1b) of the medium tube (1) are connected to each other, and the slide-on sleeve (5) is finally pushed into an overlapping position with regard to the area of connection of the lengths of pipes, characterized in that the second, neighboring length of pipe (1a), which is opposite to the mounted slide-on sleeve (5), is cleaned on the first length of pipe (1b); then the socket pipe (5c) from the case (6) is slipped on to the cleaned opposite end of the second length of pipe (1a) and the case (6) is removed, so that subsequently the end of the first length of pipe (1b) which is now situated opposite the socket pipe (5c) is cleaned, and finally the socket pipe (5c) is pushed into an overlapping position with regard to the area of connection.

## Revendications

1. Manchon tubulaire extérieur (5) pour la section de connexion d'élements de tuyau (1a, 1b) constituant un tuyau isolé thermiquement et comportant un tuyau de fluide intérieur (1), un tuyau extérieur de revêtement (3) et une couche d'isolation disposée entre les deux, le manchon extérieur faisant un pont au-dessus de la zone entre les extrémités avoisinantes des tuyaux de revêtement (3) d'éléments de tuyau avoisinants pour obtenir une surface de revêtement fermée, caractérisé en ce que le manchon (5) consiste en un tuyau à manchon (5c) et un revêtement (6) qui est en contact sans pression avec les surfaces extérieure (5a) et intérieure (5b) du tuyau à manchon (5c) sans y adhérer mais en les entourant de façon complète, le manchon (5) pouvant être enfilé sur le tuyau extérieur (3) des éléments de tuyau à relier (1a, 1b), et en ce qu'à l'état monté le tuyau à manchon (5c) et le revêtement (6) peuvent être séparés.

2. Manchon extérieur selon la revendication 1 caractérisé par un revêtement (6) en matière plastique, notamment en polyéthylène.

3. Manchon extérieur selon la revendication 1 ou 2 caractérisé en ce que le revêtement (6) est constitué du moins partiellement par une feuille (6a, 6b).

4. Manchon tubulaire selon l'une des revendications 1 à 3 caractérisé en ce que le côté intérieur du revêtement (6) est constitué par un tuyau de protection (6d) qui est stable quant à sa forme.

5. Manchon extérieur selon l'une des revendications 1 à 3 caractérisé en ce que le manchon extérieur est constitué exclusivement par une feuille (6a, 6b).

6. Manchon extérieur selon l'une des revendications 1 à 5 caractérisé en ce que le matériau du revêtement (6) est soudé à au moins une des extrémités frontales du tuyau à manchon (5c) par une couture plate (6c).

7. Manchon extérieur selon les revendications 5 et 6 caractérisé en ce qu'une feuille à une pièce (6a, 6b) est rabattue à une extrémité du tuyau à manchon (5c) vers l'intérieur tout en étant soudée à l'extrémité opposée du tuyau à manchon (5c) par une seule couture annulaire (6c).

8. Procédé pour le montage d'un manchon extérieur (5) d'après au moins une des revendications 1 à 7 dans lequel le manchon extérieur est poussé sur une extrémité d'un premier élément de tuyau (16), les extrémités avoisinantes des éléments (1a, 1b) du tuyau de fluide (1) étant reliées les unes avec les autres, et dans lequel le manchon extérieur (5) est enfin poussé dans la position de chevauchement par rapport à la zone de connexion des éléments de tuyau, caractérisé en ce que l'on nettoie d'abord sur le premier élément (1b) l'extrémité opposée au manchon (5) encastré de l'élément de tuyau (1a), en ce qu'ensuite le tuyau à manchon (5c) est sorti du revêtement (6) et placé sur l'extrémité nettoyée opposée du deuxième élément de tuyau (1a) en enlevant le revêtement (6), en ce qu'ensuite l'extrémité désormais mis en regard du tuyau à manchon (5c) du premier élément de tuyau (1b) est nettoyée et en ce qu'enfin le tuyau à manchon (5c) est poussé dans la position de chevauchement par rapport à la zone de liaison.

Fig.1

Fig.2

Fig.3

0 059 263

**Fig.4**

0 059 263

Fig.5

0 059 263

Fig. 6

0 059 263

Fig.7

0 059 263